# EUROPEAN PATENT APPLICATION

(11) **EP 2 899 971 A1**
(43) Date of publication of application: **29.07.2015**
(21) Application number: 14175993.6
(22) Date of filing: 07.07.2014
(51) Int. Cl.: H04N 7/20, H04H 40/90, H04N 21/426

(54) **Apparatus for receiving satellite broadcasting and method for receiving satellite broadcasting thereof**

(30) Priority: 22.01.2014 KR 20140007548
(71) Applicant: Samsung Electronics Co., Ltd, Gyeonggi-do 443-742 (KR)
(72) Inventor: Seo, Min-suk, Suwon-si, Gyeonggi-do (KR); Park, Jeong-kee, Seongnam-si, Gyeonggi-do (KR); Lee, Jong-po, Hwaseong-si, Gyeonggi-do (KR)
(74) Representative: Appleyard Lees

(57) **Abstract**

A satellite broadcasting receiving apparatus is provided. The apparatus includes a storage configured to store satellite channel information, a multituner configured to include a plurality of tuners to be connected to a satellite broadcasting cable, a signal processor configured to process a satellite broadcasting signal received through the multituner, and a controller configured to search a tuner to which the satellite broadcasting cable is connected among the plurality of tuners using the satellite channel information, and connect the searched tuner and the signal processor.

## Description

### CROSS-REFERENCE TO RELATED APPLICATION

This application claims priority from Korean Patent Application No. 10-2014-0007548, filed on January 22, 2014, in the Korean Intellectual Property Office, the disclosure of which is incorporated herein by reference in its entirety.

### BACKGROUND

### 1. Field

Apparatuses and methods consistent with exemplary embodiments relate to a satellite broadcasting receiving apparatus and a satellite broadcasting receiving method thereof, and more particularly, to a satellite broadcasting receiving apparatus including a multituner, and a satellite broadcasting receiving method thereof.

### 2. Description of the Related Art

With the development of electronic technology, various types of electronic products have been developed and spread. Cable broadcasting, terrestrial broadcasting, or satellite broadcasting has been provided to users through televisions (TVs). In addition to TVs, settop boxes may be used as satellite broadcasting receiving apparatuses.

The broadcasting receiving apparatuses have a broadcasting receiving function as well as functions such as internet access, Bluetooth, and a modem function, and thus interfacing with external apparatuses has been also greatly increased. Accordingly, the functions of the broadcasting receiving apparatuses are increasingly growing.

In response to receiving satellite broadcasting serviced using artificial satellites, satellite broadcasting cables have to be coupled to tuners. In recent years, since a multituner is supported, a plurality of tuners are included in the satellite broadcasting receiving apparatuses. At this time, after the user checks a tuner to which the satellite broadcasting cable is connected with the naked eye, the user has to select the tuner to which the satellite broadcasting cable is connected through a remote controller.

### SUMMARY

One or more exemplary embodiments may overcome the above disadvantages and other disadvantages not described above. However, it is understood that one or more exemplary embodiment are not required to overcome the disadvantages described above, and may not overcome any of the problems described above.

One or more exemplary embodiments are to provide a satellite broadcasting receiving apparatus which supports a multituner and automatically searches a tuner to which a satellite broadcasting cable is connected among a plurality of tuners without directly specifying the tuner to which the satellite broadcasting cable is connected by a user, and a satellite broadcasting receiving method thereof.

According to an aspect of an exemplary embodiment, there is provided a method for receiving broadcasting of a broadcasting receiving apparatus. The method may include: detecting one frequency channel from among a plurality of frequency channels included in pre-stored broadcasting channel information by tuning a multituner including a plurality of tuners; determining that in response to detecting the frequency channel through one among the plurality of tuners, a broadcasting cable is connected to the tuner in which the frequency channel is detected; and receiving a broadcasting signal through the tuner to which the broadcasting cable is connected.

The broadcasting receiving apparatus may be a satellite broadcasting receiving apparatus, the pre-stored broadcasting channel information may be pre-stored satellite broadcasting channel information, the broadcasting cable may be a satellite broadcasting cable, and the broadcasting signal may be a satellite broadcasting signal

The method may further include, in response to the frequency channels not being detected through the plurality of tuners, outputting an error message.

The method may further include displaying a single cable connection menu; and in response to selecting the single cable connection menu, displaying a plurality of pieces of service information. The detecting may include, in response to selecting one of the plurality of pieces of service information, selecting a frequency channel matching the selected service information among the pre-stored broadcasting channel information, and detecting the selected frequency channel.

The method may further include, in response to detecting the frequency channels through the plurality of tuners, outputting a guide message configured to guide a dual cable connection menu to be selected.

The method may further include, in response to selecting the dual cable connection menu, constituting a plurality of screens using broadcasting signals received through the plurality of tuners.

The broadcasting channel information may include at least one selected from a group consisting of a channel name, a broadcasting company, a broadcasting time, resolution, service information, and frequency information.

The detecting may include searching frequency channels according to a received signal strength indication (RSSI) method.

According to an aspect of an exemplary embodiment, there is provided an apparatus for receiving broadcasting. The apparatus may include: a storage configured to store channel information; a multituner configured to include a plurality of tuners to be connected to a broadcasting cable; a signal processor configured to process a broadcasting signal received through the multituner; and a controller configured to search a tuner to which the broadcasting cable is connected among the plurality of tuners using the channel information, and connect the searched tuner and the signal processor.

The channel information may be satellite channel information, the broadcasting cable may be a satellite broadcasting cable, and the broadcasting signal may be a satellite broadcasting signal

The apparatus may further include a communication interface configured to perform communication with an external display apparatus. The controller may transmit the broadcasting signal processed in the signal processor to the external display apparatus through the communication interface.

The apparatus may further include a display configured to display the broadcasting signal processed in the signal processor.

The controller may display an error message in the display in response to the plurality of frequency channels not being detected in the plurality of tuners.

The controller may display a single cable connection menu and display a plurality of pieces of service information in response to selecting the single cable connection menu, and in response to selecting one of the plurality of pieces of service information, select a frequency channel matching the selectedservice information among pre-stored broadcasting channel information and detect the selected frequency channel.

The controller may output a guide message configured to guide a dual cable connection menu to be selected in response to detecting the plurality of frequency channels through the plurality of tuners.

The controller may constitute a plurality of screens using broadcasting signals received through the plurality of tuners in response to the dual cable connection menu being selected.

The channel information may include at least one selected from a group consisting of a channel name, a broadcasting company, a broadcasting time, resolution, satellite service information, and frequency information.

The controller may control the multituner to search frequency channels according to a received signal strength indication (RSSI) method.

According to the above-described various exemplary embodiments, the broadcasting receiving apparatus may automatically search a tuner to which a broadcasting cable is connected even without checking whether or not a broadcasting cable is connected to the specific tuner among a plurality of tuners with naked eye.

Additional aspects and advantages of the exemplary embodiments will be set forth in the detailed description, will be obvious from the detailed description, or may be learned by practicing the exemplary embodiments.

### BRIEF DESCRIPTION OF THE DRAWING FIGURES

The above and/or other aspects will be more apparent by describing in detail exemplary embodiments, with reference to the accompanying drawings, in which:
FIG. 1 is a schematic view illustrating a broadcasting receiving apparatus according to an exemplary embodiment;
FIG. 2 is a block diagram illustrating a configuration of a satellite broadcasting receiving apparatus according to an exemplary embodiment;
FIGS. 3A to 4B are views illustrating user interface (UI) screens according to an operation process of a satellite broadcasting receiving apparatus according to an exemplary embodiment;
FIG. 5 is a view illustrating a multituner unit according to an exemplary embodiment;
FIG. 6 is a table illustrating an example of satellite channel information stored in a storage unit;
FIG. 7 is a view illustrating a satellite broadcasting receiving apparatus according to another exemplary embodiment;
FIG. 8 is a block diagram illustrating the satellite broadcasting receiving apparatus described in FIG. 7; and
FIG. 9 is a flowchart illustrating a satellite broadcasting receiving method of a satellite broadcasting receiving apparatus according to an exemplary embodiment.

### DETAILED DESCRIPTION OF THE EXEMPLARY EMBODIMENTS

Hereinafter, exemplary embodiments will be described in more detail with reference to the accompanying drawings. In the following description, the same reference numerals are used for the same elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the exemplary embodiments with unnecessary detail.Various exemplary embodiments will now be described more fully with reference to the accompanying drawings in which some exemplary embodiments are shown. These inventive concepts may, however, be embodied in different forms and should not be construed as being limited to the exemplary embodiments set forth herein. Rather, these exemplary embodiments are provided so that this disclosure is thorough and complete and fully conveys the inventive concept to those skilled in the art. Further, in describing the exemplary embodiments, detailed description of the known functions and constructions will be omitted if it is deemed to make the gist of the inventive concept unnecessarily vague.

It will be understood that, although the terms first, second, A, B, etc. may be used herein in reference to elements of the exemplary embodiments, such elements should not be construed as limited by these terms. For example, a first element could be termed a second element, and a second element could be termed a first element, without departing from the scope of the present invention. Herein, the term "and/or" includes any and all combinations of one or more referents.

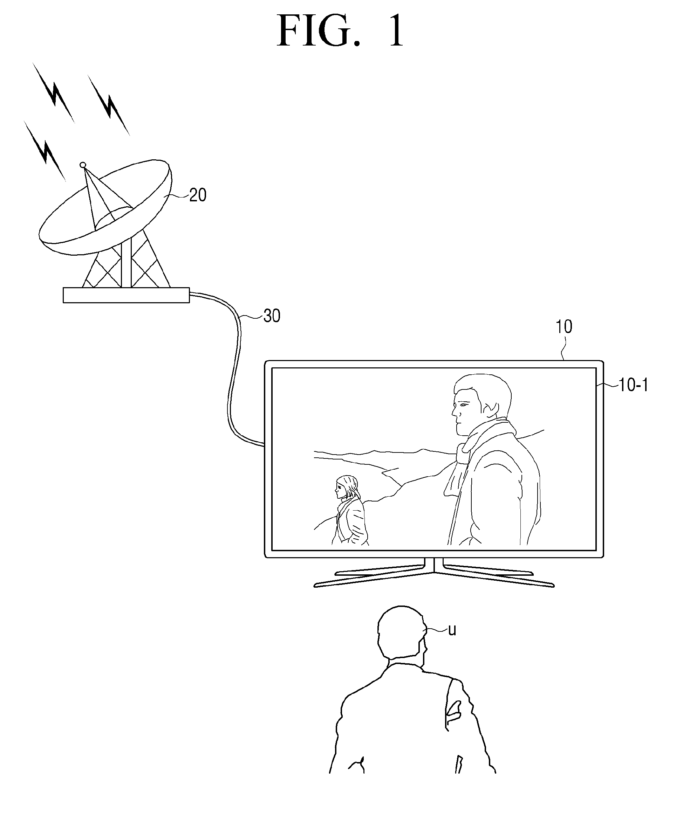

FIG. 1 is a schematic view illustrating a broadcasting receiving apparatus according to an exemplary embodiment.

As illustrated in FIG. 1, a satellite broadcasting receiving apparatus 10 is connected to a satellite broadcasting antenna 20 through a satellite broadcasting cable 30. The satellite broadcasting antenna 20 receives a satellite broadcasting signal from an external artificial satellite, and provides the received satellite broadcasting signal to the satellite broadcasting receiving apparatus. A user U may watch a satellite broadcasting image 10-1 provided by the satellite broadcasting receiving apparatus 10.

The satellite broadcasting receiving apparatus 10 may determine whether the satellitebroadcasting cable 30 is connected to a specific tuner of a multituner. Even in response to the tuner, to which the satellite broadcasting cable 30 is connected, being not recognized by the user U, the satellite broadcasting receiving apparatus 10 may receive the satellite broadcasting image 10-1.

At this time, the satellite broadcasting receiving apparatus 10 may be a display apparatus or a settop box. The display apparatus may be implemented with variable apparatuses including display units which may receive satellite broadcasting, such as a television (TV), a portable phone, a personal digital assistant (PDA), a laptop personal computer (PC), a monitor, a tablet PC, an electronic book, an electronic picture frame, or a kiosk. In response to the satellite broadcasting receiving apparatus 10 being a settop box, the settop box may provide a satellite broadcasting image to an external display apparatus, and the user U may receive the satellite broadcasting image from the external display apparatus. Further, the satellite broadcasting receiving apparatus is not limited thereto, and any apparatus which may receive satellite broadcasting provided using an artificial satellite other than the above-described display apparatus and settop box may be applied as the satellite broadcasting receiving apparatus 10. Further, in the exemplary embodiment, the satellite broadcasting receiving apparatus 10 may transmit a control signal for controlling the satellite broadcasting antenna 20,and the broadcasting receiving apparatus is configured to receive the satellite broadcasting through the satellite broadcasting cable 30.

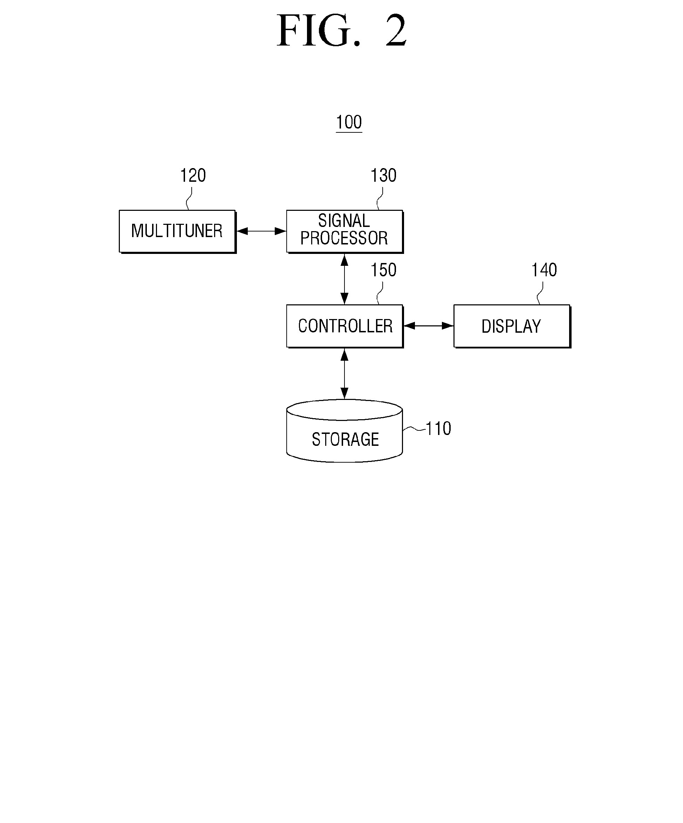

FIG. 2 is a block diagram illustrating a configuration of a satellite broadcasting receiving apparatus according to an exemplary embodiment.

Referring to FIG. 2, a satellite broadcasting receiving apparatus 100 includes a storage unit 110, a multituner unit 120, a signal processor 130, a display unit 140, and a controller 150.

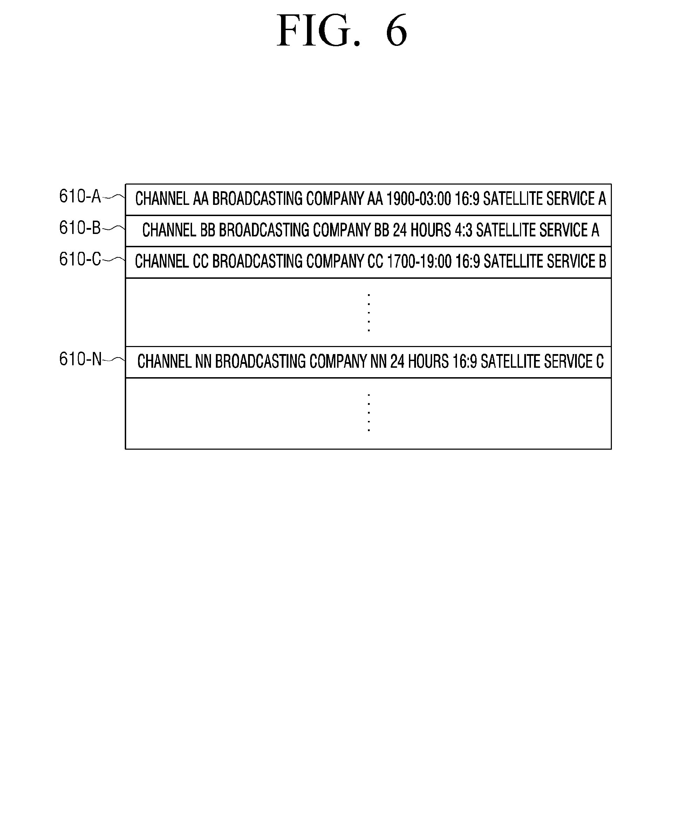

The storage unit 110 stores various kinds of programs and data necessary for an operation of the satellite broadcasting receiving apparatus 100. The storage unit 110 also stores satellite channel information. The satellite channel information may include at least one selected from the group consisting of a satellite broadcasting channel name, a satellite broadcasting company, a satellite broadcasting time, resolution of satellite broadcasting, satellite service information, and frequency information. The satellite channel information may be stored in fabrication of the satellite broadcasting receiving apparatus 100. The satellite channel information may be received from a satellite service provider or may be received through a network such as the Internet. The storage unit 110 may store location information of the satellite broadcasting receiving apparatus 100 and location information of a satellite. For example, in response to the satellite broadcasting receiving apparatus 100 being located in Korea, information such as 135 degrees east longitude may be also stored in the storage unit 110. The information in stored in the storage unit 110 may include comprehensive information necessary for an operation of the satellite broadcasting receiving apparatus 100. The detailed example of the satellite channel information stored in the storage unit 110 will be described in detail with reference to FIG. 6.

The storage unit 110 may include a random access memory (RAM), a read only memory (ROM), a flash memory, a hard disc, a compact disc/digital versatile disc (CD/DVD), or the like. In addition, various storage devices may perform a function of the storage unit 110.

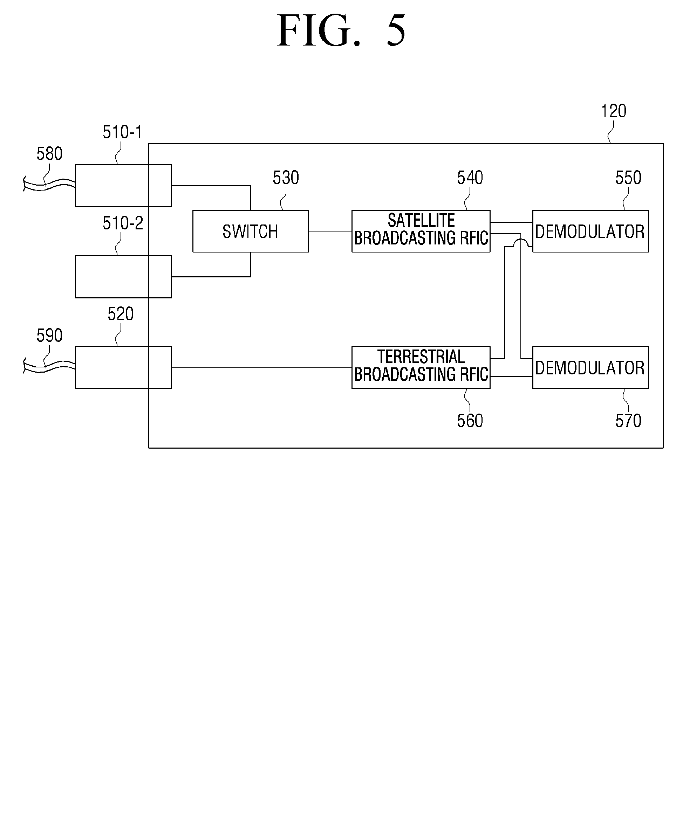

The multituner unit 120 includes a plurality of tuners which may be connected to a satellite broadcasting cable. The satellite broadcasting cable serves as an interface configured to connect a satellite broadcasting antenna and the satellite broadcasting receiving apparatus 100. A component of the multituner unit 120 will be described with reference to FIG. 5 below. The multituner unit 120 may include a plurality of tuners 510-1, 510-2, and 520. A first tuner 510-1 and a second tuner 510-2 are tuners configured to receive satellite broadcasting. A third tuner 520 is a tuner configured to receive terrestrial broadcasting. A satellite broadcasting cable 580 may be connected to the first tuner 510-1 and the second tuner 510-2. The satellite broadcasting receiving apparatus 100 may also be a kind of broadcasting receiving apparatus. The satellite broadcasting receiving apparatus may receive terrestrial broadcasting and display the terrestrial broadcasting, and include a tuner configured to receive the terrestrial broadcasting. A switch 530 may provide satellite broadcasting signals received from the plurality of tuners to a satellite radio frequency integrated circuit (RF IC) 540 without interference. The satellite RF IC 540 is a circuit configured to generate a RF signal in response to a tuning command of specific frequency being input from the controller 150 to the multituner unit 120. The demodulator 550 may extract an original signal from a modulated wave. The demodulator 550 may control intensities of signals of the satellite RF IC 540 and a terrestrial RF IC 560 using auto gain control (AGC) based on the tuning command of the controller 150. In response to receiving broadcasting signals in the plurality of tuners and the satellite broadcasting receiving apparatus being a display apparatus, the satellite broadcasting receiving apparatus may display a plurality of images.

The signal processor 130 may process a satellite broadcasting signal received through the multituner unit. The signal processor 130 may include a demultiplexer (DEMUX), a video processor, an audio processor, a general data processor, or the like. The DEMUX divides audio data, video data, and general data from content acquired through various units such as the multituner unit 120, the storage unit 110, or an interface. The video processor performs decoding on the provided video data, scales a decoding result to match a screen size, and perform processing such as converting of a frame rate to match an output rate. The audio processor performs various processing such as decoding, noise filtering, or amplification on the audio data provided from the DEMUX. The audio processor provides the processed audio data to an audio output unit or an audio signal output unit. The general data may include meta data, broadcasting subtitles, or the like, and may be controlled by the controller 150, which will be described later.

In response to the satellite broadcasting receiving apparatus 100 being a display apparatus, the satellite broadcasting receiving apparatus 100 may further include the display unit 140 configured to display a satellite broadcasting signal processed in the signal processor 130. The display unit 140 may display a satellite broadcasting image on a screen using the video data generated and output in the video processor. The display unit 140 may be implemented with a liquid crystal display (LCD) type display including a display panel (not shown) and a backlight unit (not shown). Alternatively, the display unit 140 may be implemented with an organic light-emitting diode (OLED) type display, a plasma display panel (PDP) type display, or other various types of displays.

The controller 150 searches a tuner to which a satellite broadcasting cable is connected among the plurality of tuners using pre-stored satellite channel information. The controller 150 may connect the searched tuner and the signal processor. A detailed operation of the controller will be described with reference to FIG. 5 below.

FIG. 5 illustrates that the satellite broadcasting cable 580 is coupled to the first tuner 510-1 configured to receive satellite broadcasting, a satellite broadcasting cable is not coupled to the second tuner 510-2, and a terrestrial broadcasting cable 590 is coupled to the third tuner 520 configured to receive terrestrial broadcasting. In response to selecting a satellite service by a user operation, the controller 150 searches for satellite channel information stored in the storage unit 110 and performs tuning on the first tuner 510-1 and the second tuner 510-2 of the multituner unit 120 with frequency information corresponding to the selected satellite service.

At this time, the satellite broadcasting cable 580 is coupled to the first tuner 510-1, and thus a satellite broadcasting signal corresponding to the satellite service selected by the user operation may be detected from the first tuner 510-1. However, the controller 150 also performs tuning on the second tuner 510-2 with the frequency information while tuning the first tuner 510-1. The satellite broadcasting receiving apparatus 100 may automatically determine whether the satellite broadcasting cable 580 is connected to a particular tuner among the plurality of satellite tuners 510-1 and 510-2 without visually checking whether the satellite broadcasting cable 580 is connected to a particular tuner among the plurality of satellite tuners 510-1 and 510-2 by the user with the naked eye.

The controller 150 may connect the searched tuner to which the satellite broadcasting cable 580 is connected and the signal processor. The satellite broadcasting signal received from the outside is divided into video data, audio data, and general data. Video signal processing may be performed on the video data, and the processed video data may be transmitted to the display unit 140 and provided to the user. Audio signal processing may be performed on the audio data, and the processed audio data may be transmitted to a speaker (not shown) and provided to the user. The general data may be stored in the storage unit 110 or may be appropriately processed, according to a determination of the controller 150.

The controller 150 may display an error message to the display unit 140 in response to the frequency channels not being searched and/or detected in the plurality of tuners 510-1 and 510-2. The error message may be formed of various user interface (UI) types, an audio type, or the like. For example, the error message may be provided to a user in a pop-up window such as 'A satellite broadcasting signal is not detected. Please check a satellite broadcasting state and a cable coupling state'.

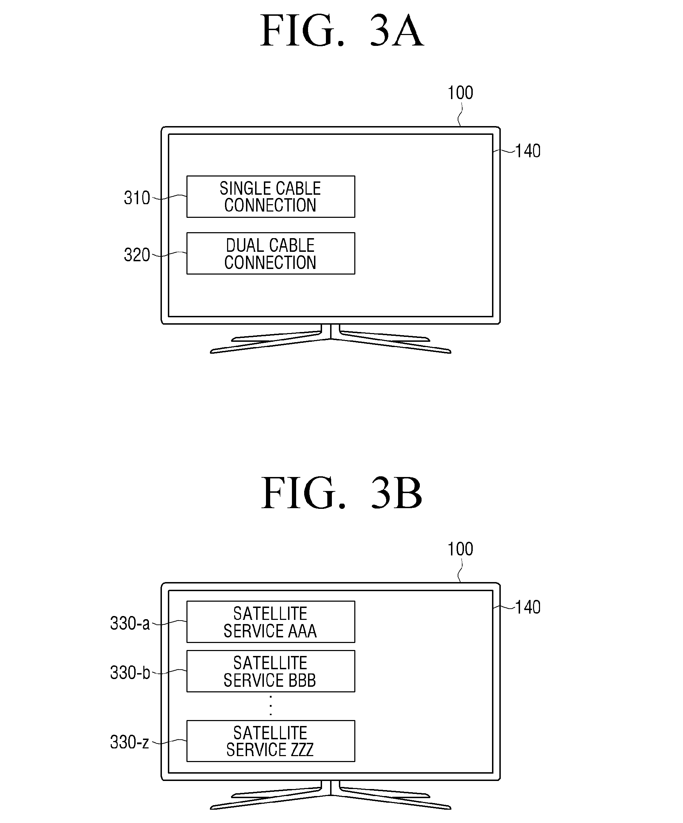

FIGS. 3A to 4B are views illustrating UI screens according to an operation process of a satellite broadcasting receiving apparatus according to an exemplary embodiment. The satellite broadcasting receiving apparatus 100 may provide various menus in connection with the broadcasting channel reception to the user in a UI form.

In FIG. 3A, a single cable connection menu 310 and a dual cable connection menu 320 are arranged in the display unit 140. The single cable connection menu 310 is a menu configured to permit connection of the satellite broadcasting cable to only one of the plurality of tuners of the satellite broadcasting receiving apparatus. The dual cable connection menu 320 is a menu configured to permit connection of two satellite broadcasting cables to the plurality of tuners of the satellite broadcasting receiving apparatus. In response to normally receiving satellite broadcasting signals in two tuners by selecting the dual cable connection menu 320 by the user, two satellite broadcastings may be provided to a screen of the display unit 140.

The controller 150 may display a plurality of pieces of satellite service information as illustrated in FIG. 3B in response to selecting the single cable connection menu 310 via the user operation. The satellite broadcasting receiving apparatus 100 may store the satellite service information in the storage unit 110. The satellite service may be an artificial satellite or satellite broadcasting service of a provider providing satellite broadcasting service. The satellite service information may be provided in a fabrication process or downloaded from the Internet or the like through a network. The satellite broadcasting receiving apparatus 100 may provide pre-stored satellite service 330-a to 330-z to the user through the display unit 140. The user may select one among the displayed satellite service 330-a to 330-z.

The controller 150 may select a frequency channel matching the selected satellite service information among the stored satellite broadcasting channel information and search for the selected frequency channel in response to selecting one piece of satellite service information among the plurality of pieces of satellite service information. The controller 150 tunes the plurality of tuners according to frequency channel information matching the satellite service information selected by the user operation, and then receives satellite broadcasting signals.

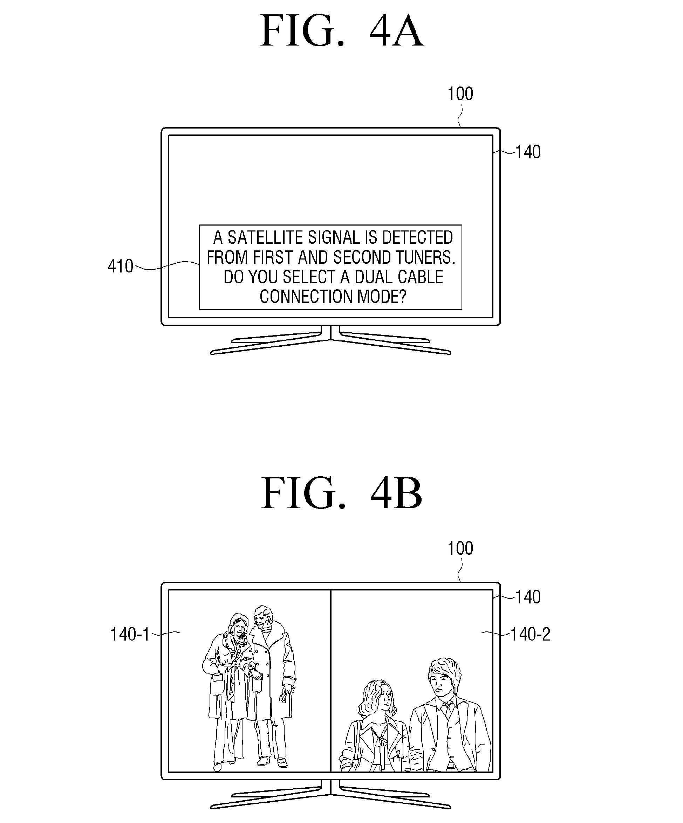

In response to selecting the single cable connection menu 310 and selecting the satellite service AAA 330-a by the user, the controller 150 may control the display unit 140 to output a guide message configured to guide the dual cable connection menu to be selected in response to searching and/or detecting frequency channels in the plurality of tuners, as illustrated in FIG. 4A. The guide message may be provided to the user in various UI forms, an audio form, or the like. FIG. 4A illustrates the guide message in a pop-up form 410.

At this time, the controller 150 may control the display unit 140 to constitute a plurality of screens using the satellite broadcasting signals received through the plurality of tuners as illustrated in FIG. 4B in response to selecting the dual cable connection menu. The controller 150 may divide a screen of the display unit 140 into a plurality of screens 140-1 and 140-2 and provide a plurality of satellite broadcastings on the plurality of screens or provide the plurality of satellite broadcastings to the plurality of screens through a picture-in-picture (PIP) method, a picture-by-picture (PBP) method, or the like.

The exemplary embodiment has illustrated that the single cable connection menu 310 or the dual cable connection menu 320 is selected by the user operation, but the satellite broadcasting receiving apparatus 100 may automatically select the menu 310 or 320. The satellite broadcasting receiving apparatus 100 may provide dual cable connection or more according to the number of provided tuners. Further, other than the satellite broadcasting receiving apparatus, any apparatus which may include a multituner and may be connected to an external cable may be applied to the inventive concept.

FIG. 5 is a view illustrating a multituner unit according to an exemplary embodiment.

Referring to FIG. 5, the multituner unit 120 may include the plurality of tuners 510-1, 510-2, and 520, the switch 530, the satellite broadcasting RF IC 540, the terrestrial broadcasting RF IC 560, and a plurality of demodulators 550 and 570. The multituner unit in the exemplary embodiment is an example, and components may be further included in the multituner unit. The RF IC is a circuit in which an RF circuit is implemented on one semiconductor chip using an active device and a passive device. The switch 530 may switch signals received from the plurality of tuners 510-1 and 510-2. In response to receiving the satellite broadcasting signal from the first tuner 510-1, the multituner unit 120 may transmit a broadcasting signal signal-processed in the satellite broadcasting RF IC and then processed through the demodulators 550 and 570 to the signal processor 130.

The exemplary embodiment has illustrated that the demodulators 550 and 570 are included in the multituner unit 120, but this is merely exemplary, and the demodulators 550 and 570 may be included in the signal processor 130.

The controller 150 may control the multituner unit to search and/or detect a frequency channel according to an RSSI method. The controller 150 may use various methods to tune the plurality of tuners with frequency information corresponding to a satellite service by way of a user operation, and then detect satellite broadcasting signals. The RSSI method is a method for measuring an intensity of a signal. The exemplary embodiment has estimated only the RSSI as the signal detection method, but any method which may detect a broadcasting signal from a tuner may be used without limit.

In response to an intensity of a signal being too large or too small, an intensity of a signal between the demodulator 550 and the satellite broadcasting RF IC 540 may be controlled through AGC.

FIG. 6 is a table illustrating an example of satellite channel information stored in a storage unit.

Referring to FIG. 6, the satellite channel information stored in the storage unit 110 may include at least one selected from the group consisting of a channel name, a broadcasting company, a broadcasting time, resolution, satellite service information, and frequency information. A channel name (channel AA), a broadcasting company (broadcasting company AA), a broadcasting time (19:00 to 03:00), an aspect ratio of a screen (16:9), and satellite service information (satellite service A) are arranged in a column 610-A. Other than the above-described satellite channel information, resolution, frequency information, or the like may be stored. Further, the storage unit 110 may store information necessary for the satellite broadcasting receiving information 100 under control of the controller 150.

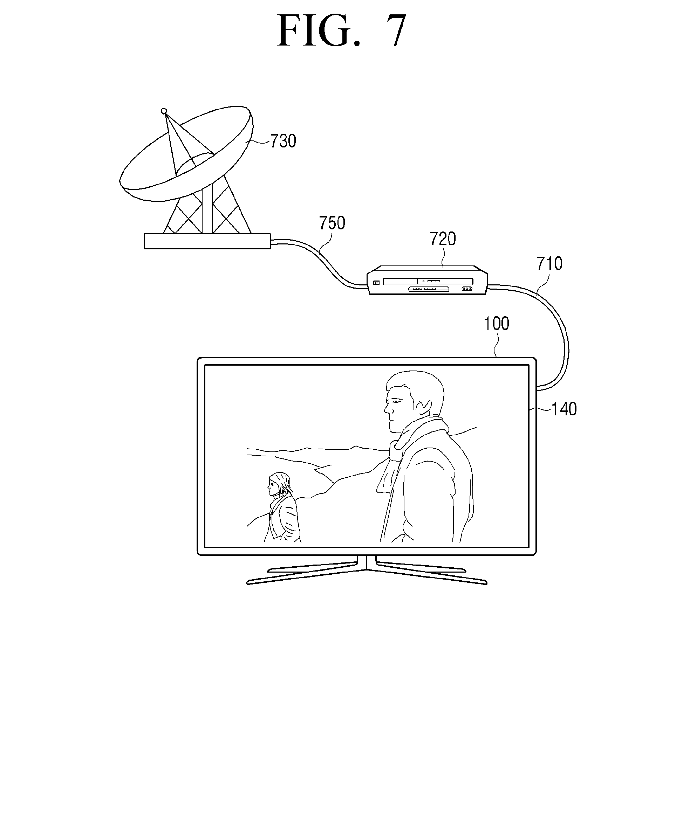

FIG. 7 is a view illustrating a satellite broadcasting receiving apparatus according to another exemplary embodiment.

Referring to FIG. 7, a satellite broadcasting receiving apparatus may be a settop box 720. The settop box 720 may further include a communication interface unit 710 configured to perform communication with an external display apparatus. The settop box 720 may include a multituner unit 120, and may perform the above-described functions of the satellite broadcasting receiving apparatus.

At this time, a controller of the settop box 720 may transmit a satellite broadcasting signal processed in a signal processor to the external display apparatus through the communication interface unit. Further, the settop box may be connected to a satellite broadcasting antenna through a cable 750 and receive the satellite broadcasting signal.

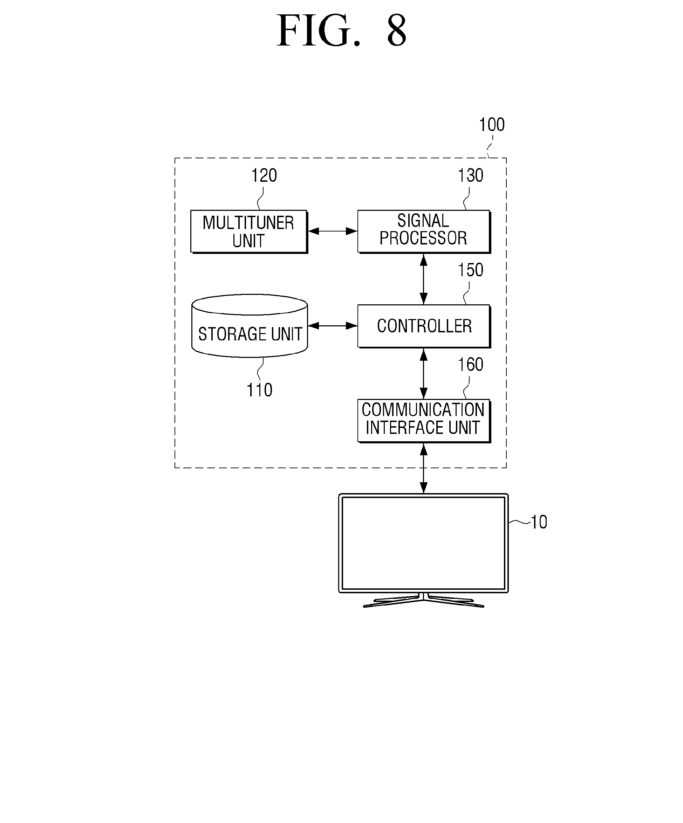

FIG. 8 is a block diagram illustrating the satellite broadcasting receiving apparatus 100 described in FIG. 7.

Referring to FIG. 8, the settop box, that is, the satellite broadcasting receiving apparatus 100 includes a storage unit 110, a multituner unit 120, a signal processor 130, a controller 150, and a communication interface unit 160.

The communication interface unit 160 may transmit the satellite broadcasting signal to an external apparatus 10. The external apparatus 10 may transmit a control signal or the like to the satellite broadcasting receiving apparatus 100 through the communication interface unit 160. The storage unit 110, the multituner unit 120, the signal processor 130, and the controller 150 have been described above, and thus detailed description thereof will be omitted.

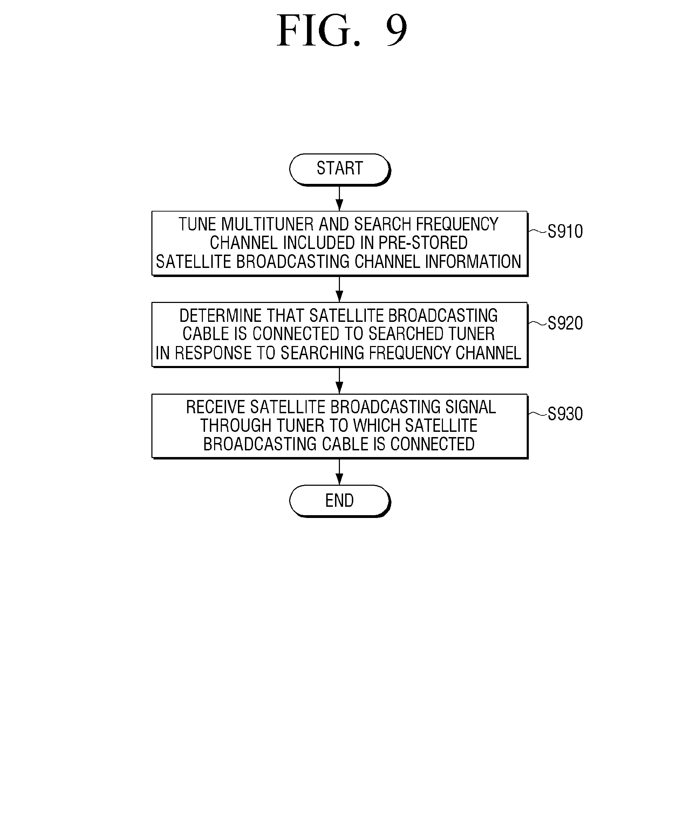

FIG. 9 is a flowchart illustrating a satellite broadcasting receiving method of a satellite broadcasting receiving apparatus according to an exemplary embodiment.

Referring to FIG. 9, the satellite broadcasting receiving method of the exemplary embodiment tunes a multituner including a plurality of tuners and searches and/or detects one of the frequency channels included in pre-stored satellite broadcasting channel information (S910). In response to selecting a satellite service by a user operation, the satellite broadcasting receiving apparatus tunes the multituner with a frequency corresponding to the selected satellite service. The satellite broadcasting receiving apparatus may detect satellite signals from the plurality of tuners and search for and/or detect one among the frequency channels.

Next, in response to searching for the frequency channel through one among the plurality of tuners, the satellite broadcasting receiving apparatus determines that a satellite broadcasting cable is connected to the tuner in which the frequency channel is detected (S920). The satellite broadcasting receiving apparatus may detect a satellite broadcasting signal and determine that the detected tuner is connected to the satellite broadcasting cable.

Next, the satellite broadcasting receiving apparatus receives the satellite broadcasting signal through the tuner to which the satellite broadcasting cable is connected (S930). The satellite broadcasting receiving apparatus performs different operations according to the number of tuners in which the satellite broadcasting signals are detected.

First, in response to frequency channels not being searched and/or detected in the plurality of tuners, the satellite broadcasting receiving apparatus may output an error message. That the satellite broadcasting signals are not detected in the plurality of tuners may be result of, for example, a cable being unplugged, failure of satellite signal reception, or the like. At this time, the satellite broadcasting receiving apparatus may notify the user that the satellite broadcasting signals are not detected by a pop-up, sound, or the like.

As described above, the satellite broadcasting receiving apparatus may include various setting menus. Among the various setting menus, the satellite broadcasting receiving apparatus may include a single cable connection menu and a dual cable connection menu. The satellite broadcasting receiving method of the exemplary embodiment may further include displaying the single cable connection menu, and displaying a plurality of pieces of satellite service information in response to selecting the single cable connection menu.

At this time, the operation of searching for and/or detecting one among the frequency channels included in pre-stored satellite broadcasting channel information may include selecting frequency channel matching satellite service information selected from among the pre-stored satellite broadcasting channel information and searching the selected frequency channel, in response to one among the plurality of pieces of satellite service information. In response to searching for and/or detecting frequency channels in the plurality of tuners, the satellite broadcasting receiving apparatus may output a guide message configured to guide the dual cable connection menu to be selected. The searching for and/or detecting the frequency channel may use an RSSI method which may measure signal intensity.

At this time, the satellite broadcasting receiving apparatus may constitute a plurality of screens using the satellite broadcasting signals received through the plurality of tuners in response to selecting the dual cable connection menu.

Further, the pre-stored satellite channel information may include at least one selected from the group consisting of a channel name, a broadcasting company, a broadcasting time, resolution, satellite service information, and frequency information.

The exemplary embodiment has described a determination of a connection of the satellite broadcasting cable of the satellite broadcasting receiving apparatus including the multituner having the plurality of tuners, but this is not limited only to satellite broadcasting, and may be applied to all cases which may determine a connection state of a cable to be connected to the multituner unit. For example, even in response to a terrestrial broadcasting receiving apparatus including a multituner, the determination may be equally applied to the terrestrial broadcasting receiving apparatus like the satellite broadcasting receiving apparatus.

The satellite broadcasting receiving methods of the satellite broadcasting receiving apparatus include the operation of determining that one tuner in which the frequency channel is detected, is connected to the satellite broadcasting cable in response to searching for and/or detecting the frequency channel through the one tuner of the plurality of tuners according to the above-described various exemplary embodiments,the methods may be coded in software. The software may be stored in a non-transitory computer readable medium and used in the broadcasting receiving apparatus.

The non-transitory computer-recordable medium is not a medium configured to temporarily store data such as a register, a cache, or a memory but is an apparatus-readable medium configured to semi-permanently store data. Specifically, the programs may be stored in the non-transitory apparatus-readable medium such as a compact disc (CD), a digital versatile disc (DVD), a hard disc, a Blu-ray disc, a universal serial bus (USB), a memory card, or a read only memory (ROM), and provided.

The foregoing exemplary embodiments and advantages are merely exemplary and are not to be construed as limiting the present inventive concept. The exemplary embodiments can be readily applied to other types of devices. Also, the description of the exemplary embodiments is intended to be illustrative, and not to limit the scope of the claims, and many alternatives, modifications, and variations will be apparent to those skilled in the art.

## Claims

1. A method for receiving satellite broadcasting of a satellite broadcasting receiving apparatus, the method comprising:
detecting one frequency channel from among a plurality of frequency channels included in pre-stored satellite broadcasting channel information by tuning a multituner including a plurality of tuners;
determining that in response to detecting the one frequency channel through one among the plurality of tuners, a satellite broadcasting cable is connected to the tuner in which the frequency channel is detected; and
receiving a satellite broadcasting signal through the tuner to which the satellite broadcasting cable is connected.

2. The method as claimed in claim 1, further comprising, in response to the frequency channels not being detected through the plurality of tuners, outputting an error message.

3. The method as claimed in claim 1 or 2, further comprising:
displaying a single cable connection menu; and
displaying a plurality of pieces of satellite service information in response to selecting the single cable connection menu,
wherein the detecting includes, in response to selecting one of the plurality of pieces of satellite service information, selecting a frequency channel matching the selected satellite service information among the pre-stored satellite broadcasting channel information, and detecting the selected frequency channel.

4. The method as claimed in claim 3, further comprising, in response to detecting the frequency channels through the plurality of tuners, outputting a guide message configured to guide a dual cable connection menu to be selected.

5. The method as claimed in claim 4, further comprising, in response to selecting the dual cable connection menu, constituting a plurality of screens using satellite broadcasting signals received through the plurality of tuners.

6. The method as claimed in any one of claims 1 to 5, wherein the satellite broadcasting channel information includes at least one selected from a group consisting of a channel name, a broadcasting company, a broadcasting time, resolution, satellite service information, and frequency information.

7. The method as claimed in any one of claims 1 to 5, wherein the detecting includes searching frequency channel according to a received signal strength indication (RSSI) method.

8. An apparatus for receiving satellite broadcasting, the apparatus comprising:
a storage unit configured to store satellite channel information;
a multitunerunit configured to include a plurality of tuners to be connected to a satellite broadcasting cable;
a signal processor configured to process a satellite broadcasting signal received through the multituner unit; and
a controller configured to search a tuner to which the satellite broadcasting cable is connected among the plurality of tuners using the satellite channel information, and connect the searched tuner and the signal processor.

9. The apparatus as claimed in claim 8, further comprising a communication interface unit configured to perform communication with an external display apparatus,
wherein the controller transmits the satellite broadcasting signal processed in the signal processor to the external display apparatus through the communication interface unit.

10. The apparatus as claimed in claim 8 or 9, further comprising a display unit configured to display the satellite broadcasting signal processed in the signal processor.

11. The apparatus as claimed in claim 10, wherein the controller displays an error message in the display unit in response to the plurality of frequency channels not being detected in the plurality of tuners.

12. The apparatus as claimed in claim 10, wherein the controller displays a single cable connection menu and displays a plurality of pieces of satellite service information in response to selecting the single cable connection menu, and in response to selecting one of the plurality of pieces of satellite service information, selects a frequency channel matching the selected satellite service information among pre-stored satellite broadcasting channel information and detects the selected frequency channel.

13. The apparatus as claimed in claim 12, wherein the controller outputs a guide message configured to guide a dual cable connection menu to be selected in response to detecting the plurality of frequency channels through the plurality of tuners.

14. The apparatus as claimed in claim 13, wherein the controller constitutes a plurality of screens using satellite broadcasting signals received through the plurality of tuners in response to the dual cable connection menu being selected.

15. The apparatus as claimed in any one of claims 8 to 14, wherein the satellite channel information includes at least one selected from a group consisting of a channel name, a broadcasting company, a broadcasting time, resolution, satellite service information, and frequency information.
